# EUROPEAN PATENT SPECIFICATION

(11) **EP 0 429 274 B1**
(45) Date of publication and mention of the grant of the patent: **29.05.1996**
(21) Application number: 90312562.3
(22) Date of filing: 19.11.1990
(51) Int. Cl.: F16L 33/02

(54) **A clamping band**
Spannband
Collier de serrage

(30) Priority: 20.11.1989 JP 301442/89
(43) Date of publication of application: 29.05.1991
(73) Proprietor: KABUSHIKI KAISHA MIHAMA SEISAKUSHO, Chino-shi Nagano-ken (JP)
(72) Inventor: Hirabayashi, Toshihide, Nagano-ken (JP)
(74) Representative: Gura, Henry Alan

(56) References cited:
- EP-A- 0 243 224
- CH-A- 437 926
- CH-A- 580 779
- DE-A- 1 775 915
- DE-A- 2 511 575
- DE-C- 3 818 954

## Description

The present invention relates to a clamping band capable of clamping a member to be clamped which is a connector for gas hose, car boot, etc.

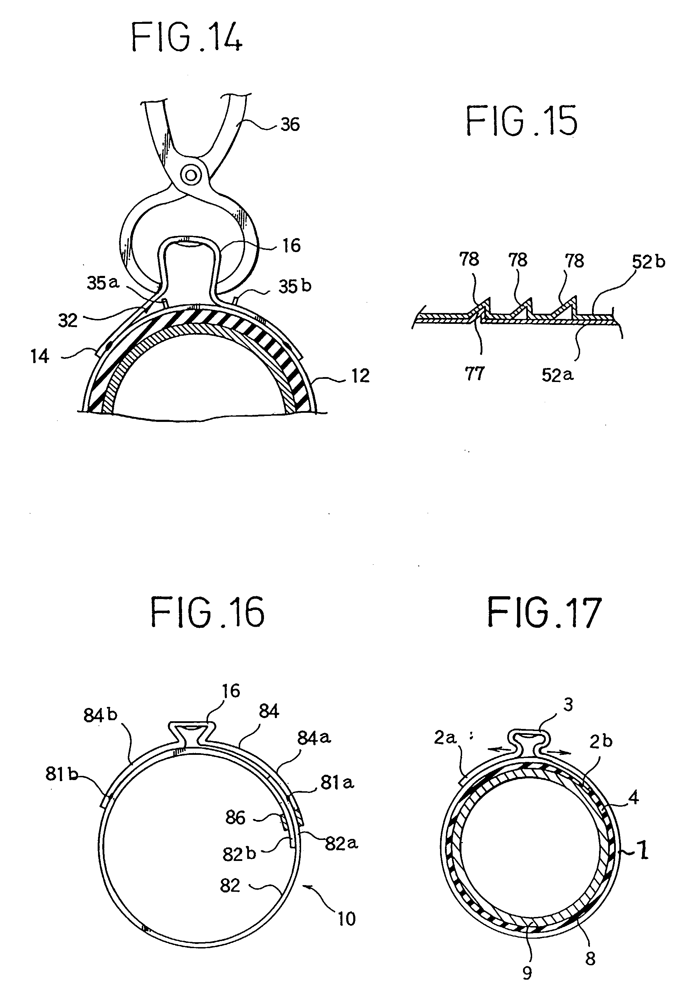

Fig. 17 is a drawing illustrating clamping achieved by a conventional clamping band. This clamping band 1 is used when a member 8 to be clamped such as rubber tubing is connected to a pipe 9.

A band piece 2 is formed in a ring, both ends thereof are overlapped with each other, and on the outer end section 2a a clamping ear 3 in the form of a bow is formed projecting outwardly. This clamping ear 3 is a known means for diameter reduction called an Oetiker's ear.

When the band piece 2 is wound on a member 8 to be clamped, the other end section 2b of the band piece 2 goes to the inside of the end section 2a with overlapping. In this clamping band 1, the band piece 2 is reduced in diameter by deforming the clamping ear 3 to tightly clamp member 4 to be clamped.

Note that the band piece 2 is made of metal.

However, since the clamping band 1 is made of metal, a slight return, ie. spring-back, occurs even the clamping ear 3 has been deformed with a pair of pliers and thus it is impossible to maintain strong clamping over a long term. This spring-back is due to the elasticity inherent in metallic materials, and this property cannot be removed.

The clamping band is for clamping a hose such as rubber, and after clamping a force in the direction toward diameter enlargement is exerted on the clamping band due to the elasticity of the member to be clamped or the pressure of the fluid passing inside the member to be clamped, and thus a long-term use will yield a looseness and result in decrease in sealing capacity. This is because the maintenance of the clamping state of the clamping band resorts to the elastic deformation of the clamping ear.

Another clamping band is known from CH-437926. in which the ends of an inner band portion are overlapped by the ends of an outer portion and which are provided with claw-like engagement elements that enter perforations in the inner band. This clamping band is also tightened by deforming an ear comprising a pair of projections, in this case on the outer band portion, but it also can loosen in use. In fact, there is free play between the engagement elements and the perforations and the elements have inclined end faces which will guide them out of the perforations if there is a reverse deflection of the ear.

According to the present invention, there is provided a metallic clamping band formed in a ring which comprises separate inner and outer band portions, opposite ends of the inner portion being overlapped by opposite ends of the outer portion and engagement means being provided between the inner and outer band portions to latch them together, the outer band portion being provided in its middle region with a clamping ear that is deformable to reduce the ring diameter, securing means on said overlapped ends providing substantially fixed connections between the inner and outer portions securing them together in a closed ring, the engagement means being disposed on one end of the inner band portion and the clamping ear overlying said one end of the inner band portion to be located between said engagement means and the said securing means of said one end of the band portion, and said engagement means comprising cooperating stop faces which act to prevent reverse deformation of the ear to increase the diameter of the band.

Since the clamping band of the present invention is provided with means to maintain the state of diameter reduction after that state has been set by the clamping ear deformation, looseness due to spring-back will not occur. Moreover, after the clamping band has been set on a member, diameter enlargement will not occur because of the elasticity of the member or, when the member is tubing carrying a fluid, because of the pressure of fluid inside the tubing.

In addition, since the clamping band may have a structure such that it can be opened at at least one location so as to be capable of freely being applied and released without having to be slid onto or off the end of the member, eg. a pipe, to be clamped.

Embodiments of the invention will now be described by way of example with reference to Figs. 1-16 of the accompanying drawings. In the drawings:
Fig. 1 is a perspective view of a first embodiment of a clamping band of the present invention;
Fig. 2 is a partly sectioned side view of the clamping band of Fig. 1;
Fig. 3 is a perspective view of one band portion;
Fig. 4 is a partly sectioned side view illustrating the clamping state of the band;
Figs. 5(a)-(c) illustrate the nesting of the ends of inner band portions;
Fig. 6 is a partly sectioned side view illustrating the clamping state of a second embodiment of a clamping band of the present invention;
Fig. 7 is a partly sectioned side view of another embodiment;
Fig. 8 is a larger scale sectional view of the latching means of the clamping band of Fig. 7;
Figs. 9 and 10 are plan views of other details in the region of the latching means of Fig. 8;
Fig. 11 is an exploded perspective view of a clamping band in another embodiment;
Fig. 12 is a partly sectioned side view illustrating the clamping state of the band of Fig. 11;
Fig. 13 is a partly sectioned side view of part of a clamping band in another embodiment;
Fig. 14 is a side view illustrating the clamping state of the band of Fig. 13;
Fig. 15 is an explanatory side view of another catch section;
Fig. 16 is a partly sectioned side view illustrating the clamping state of a clamping band in another embodiment; and
Fig. 17 is an explanatory view illustrating the clamping state of a conventional clamping band.

Preferred embodiments of the present invention will be described in detail by reference to the accompanying drawings.

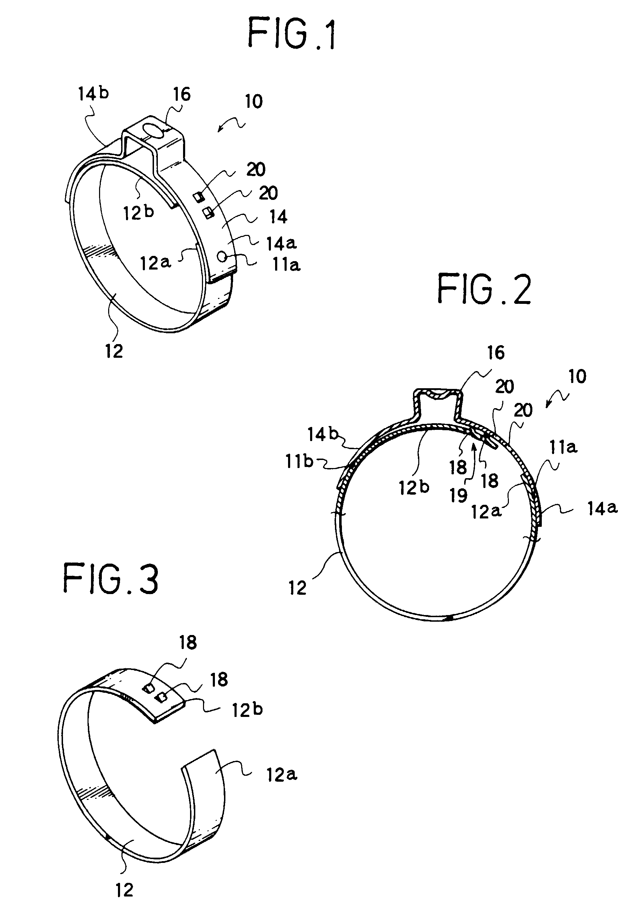

The clamping band 10 shown in Figs. 1 and 2 has a band portion 10 and a clamping portion 14.

The band portion 12 is made of a long beltshaped metal band in the form of a ring. The clamping portion 14 is overall in the form of an arc, and at the middle region thereof a clamping ear 16, bent in the form of a gate, projects outwardly. The arc-shaped sections 14a and 14b extend to each side of the ear.

The band portion 12 is overall rounded in a ring. One end section 12a is spot-welded at a spot lla on one end section 14a of the clamping portion 14. The other end section 12b is overlapped by the inner side of the clamping portion 14 and also extends under the portion 14a.

The end section 12b runs under the other arc-shaped section 14b of the clamping porticn 14 and is spot-welded at a spot 11b on the section 14b.

In the end section 12b of the band portion 12 positioned inside the section 14a of the clamping portion 14, there are catch nails 18 and 18 cut and bent up (see Fig. 3).

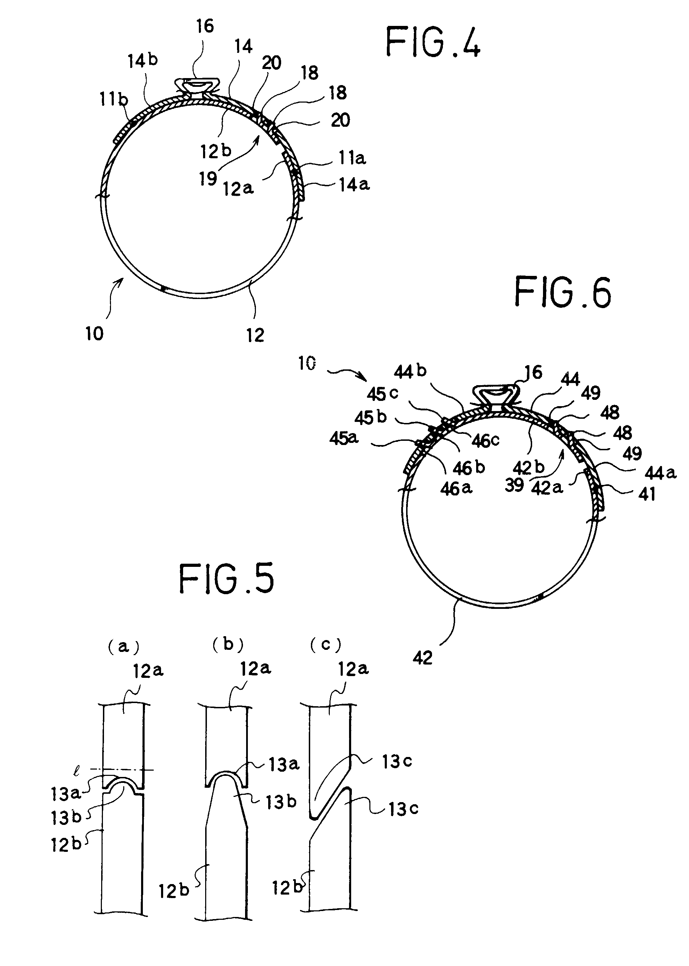

The positional relation is such that, when the clamping ear 16 of the clamping portion 14 is deformed to reduce the diameter of the band portion 12 (see Fig. 4, where the clamping ear is in the deformed state), the catch nails 18 are brought into engagement with catch holes 20 in the section 14a.

The clamping band 10 is shown in Figs. 1 and 2 before being clamped. A member to be clamped is inserted into the clamping band 10 in this state and connected to a tubular body, etc, and then the clamping band 10 is positioned over these parts where they are to be clamped together. Before the diameter of the clamping band 10 is reduced, the catch nails 18 and 18 are out of engagement with the catch holes 20 and 20.

When in this state the clamping ear 16 is deformed, the end of one end section 12a of the band portion 12 approaches the other end section 12b, with a reduction of the diameter of the clamping band 10. Then, catch nails 18 and 18 on the end section 12b of the band portion 12 engage with the catch holes 20 on one arc-shaped section 14a of the clamping portion 14 to retain the band at its reduced diameter. Note that, since the band portion 12 is urged to increase its diameter by the elasticity of the member clamped, the catch nails 18 and 18 on the end section 12b of the band portion 12 are held in tight engagement with the catch holes 20 and 20 on the other arc-shaped section 14a of the clamping portion 14, thus maintaining the reduced-diameter state.

In this condition, when the clamping ear 16 is deformed, the reduced-diameter state of the clamping band 10 may be kept, and the action of a strong clamping force can be maintained, no diameter enlargement of the clamping band 10 being caused by spring-back.

In addition, prevention of the fluid leakage from the tubing is possible if both the ends of the band portion 12 are designed so as not to have a gap in the axial direction when the tubing is clamped. Examples are shown in Figs. 5(a)-(c) of the formation of the band portion ends such that no gaps run in the axial direction ℓ. In Figs. 5(a) and 5(b), one end is in the form of a semicircular notch 13a extending longitudinally and the other end is in the form of a narrow tongue 13b which may enter the notch 13a. In Fig. 5(c), both the ends are in the form of tongues 13c and 13c which get narrower outwardly to form slant edges, leaving no gaps in the axial direction ℓ.

Note that, in the above embodiment, the relation may be reversed in the catch section 19 between the catch nails 18 on the end section 12b of the band portion 12 and the catch holes 20 on one arc-shaped section 14a of the clamping portion 14. Also, no restriction is placed on the shape of the catch nails 18 and catch holes 20; the catch nail 18 may be formed by means of caulking, etc.

Also note that, in this embodiment, the engagement section, which connects one arc-shaped section 14a with one end section 12a of the band portion 12, and the fixed section, which connects the other arc-shaped section 14b with the other end section 12b, are joined to each other by spot welding.

Fig. 6 shows another embodiment in which the clamping band 10 has, similarly to the first embodiment, a clamping portion 44 and a band portion 42.

One end section 42a of the band portion 42 is spot-welded at a spot 41 in one arc-shaped section 44a of the clamping portion 44.

The clamping portion 44 is overall in the form of an arc divided by the clamping ear 16 in the middle, into arc-shaped sections 44a and 44b. The band portion 42 is overall rounded into a ring, and the end section 42b of this band portion 42 is overlapped with the inner face of the clamping portion 44 and positioned inside the arc-shaped section 44a of the clamping portion 44.

That part of the end section 42b of the band portion 42 positioned inside the arc-shaped section 44b of the clamping portion 44 is provided with a catch section 39 with which to make engagement with the arc-shaped section 44b. In the other end section 42b three catch nails 45a,45b, and 45c are cut and bent out, and in the arc-shaped section 44b there are bored catch holes 46a,46b, and 46c with which the catch nails 45a,45b, and 45c engage.

In that part of end section 42b of the band portion 42 positioned inside the arc-shaped section 44a of the clamping portion 44, there is a catch nail 48 cut and bent up. The positional relation is such that, when the clamping ear 16 is deformed to reduce the diameter of the band portion 42, the catch nail 48 is engaged with a catch hole 49 bored in the arc-shaped section 44 of the clamping portion 44.

In the clamping band 10 of this embodiment, before diameter reduction the catch nails 45a,45b and 45c are engaged with the catch holes 46a,46b and 46c. In contrast, the catch holes 49 on the arc-shaped section 44a are out of engagement with the catch nails 48 on the end section 42b. Then, when the clamping ear 16 is deformed to reduce the diameter, the catch holes 49 engage with the catch nails 48 to maintain the clamped state.

Note that, in this embodiment, use may also be made in such a way that, after the member to be clamped has been connected to a pipe etc, the clamping band 10 is to be wrapped around the member to be clamped.

The catch section 39 is designed so that engagement is made between the catch holes 49 on the arc-shaped section 44a of the clamping portion 44 and the catch nails 48 on the other arc-shaped section 42b of the band portion 42. The engagement section is fixed by spot welding at the spot 41. The fixed section is constituted by engagement between the catch nails 45a,45b and 45c and the catch holes 46a,46b and 46c.

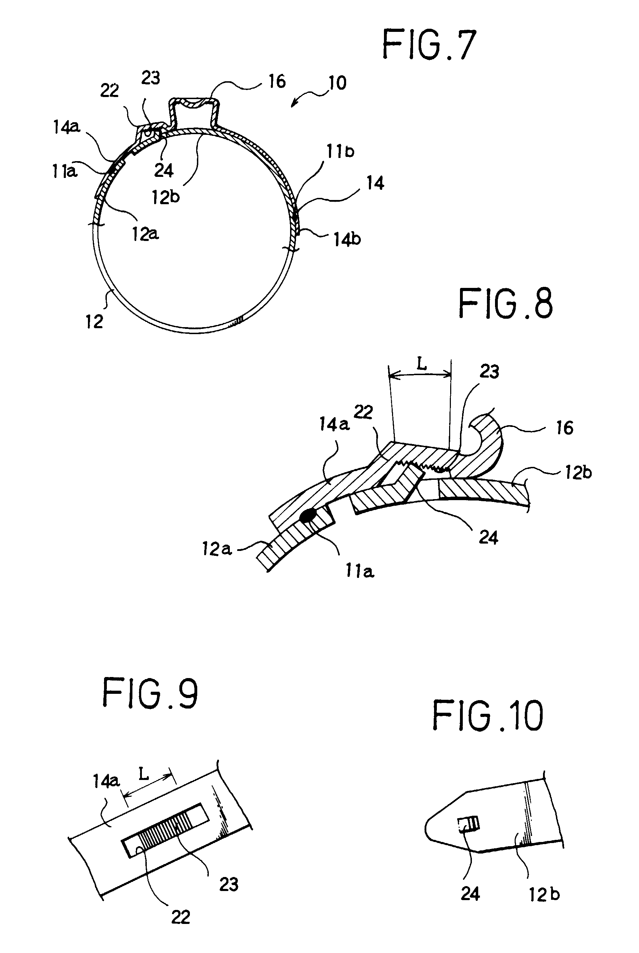

Another embodiment, to be described by reference to Figs. 7-10, also has a band portion 12 and a clamping portion 14, the latter with the clamping ear 16 at the middle thereof, being divided into two arc-shaped sections 14a and 14b.

The band portion 12 is overall rounded in a ring, and one end section 12a of the band portion 12 is spot-welded at a spot 11a on arc-shaped section 14a of the clamping portion 14. The other end section 12b of the band portion 12 extends, along the inner side of the clamping portion 14, from the arc-shaped section 14b to the arc-shaped section 14a.

The end section 12b positioned inside the arc-shaped section 14b is spot-welded at a spot 11b on the section 14b.

In the base section of the clamping ear 16 of the clamping portion 14 on the side of the arc-shaped section 14a, there is formed a projecting section 22 projecting outwardly. The end section 12b of the band portion 12 has a projecting catch nail 24 which enters the projecting section 22 to engage with a group of notches 23. Before clamping the clamping ear 16 (diameter reduction), the catch nail 24 is positioned in the projecting section 22. When the clamping ear 16 is deformed, the catch nail 24 is moved gradually over the notches 23 in the direction for diameter reduction until held in the engagement state at the clamping position.

In this embodiment, the group of notches 23 on the bottom plane in the projecting section 22 is formed over a length L so that the clamping strength of the clamping band 10 may be adjusted and size tolerances of the clamping band 10, and of the members to be clamped, such as hose, etc, may be accommodated.

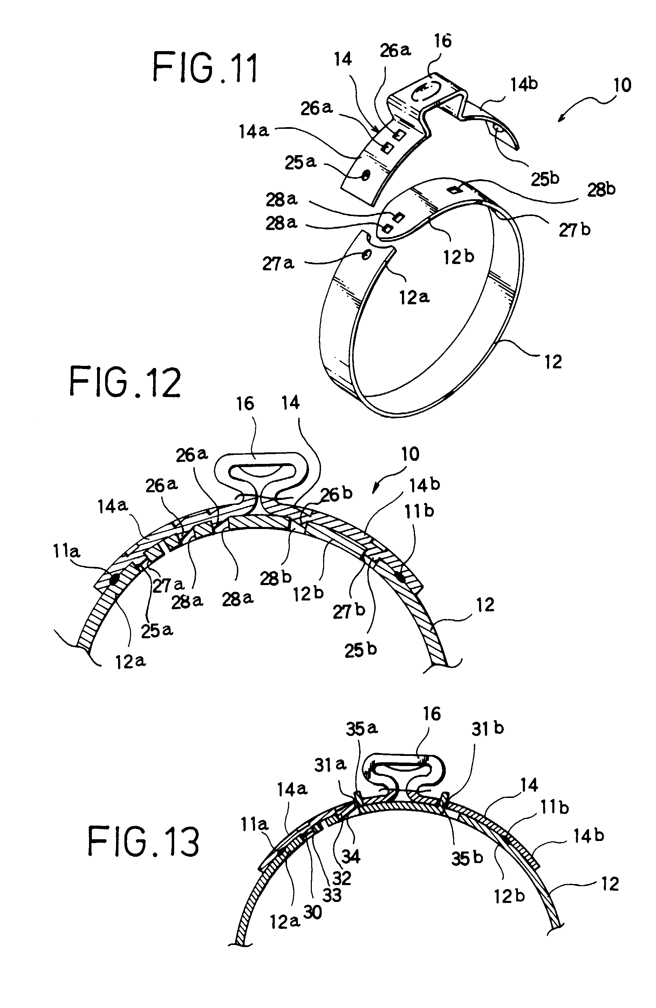

Figs. 11 and 12 refer to a further embodiment in which the clamping band 10 also has, similarly to the earlier embodiments, the band portion 12 and the clamping portion 14.

The clamping portion 14, with the clamping ear 16 at the middle thereof, is divided into two arc-shaped sections 14a and 14b.

The band portion 12 is overall rounded in a ring, with end sections 12a and 12b positioned close to each other. Both the end sections 12a and 12b are overlapped with the inner side of the clamping portion 14 in such a way that both end sections 12a and 12b terminate on the side of the arc-shaped section 14a. The arc-shaped sections 14a and 14b of the clamping portion 14 are spot-welded at spots lla and llb on the band portion 12. To effect this, the arc-shaped sections 14a and 14b are provided with projections 25a and 25b, respectively, each projecting inwardly. Also, the base section of the clamping ear 16 of the clamping portion 14 is provided with two catch nails 26a on the side of the arc-shaped section 14a and one catch nail 26b on the side of the arc-shaped section 14b.

The band portion 12 is provided, at corresponding positions, with holes 27a and 27b to engage the projections 25a and 25b of the clamping portion 14. The band portion 12 is also provided with catch holes 28a and 28b which engage the catch nails 26a and 26b, respectively, of the clamping portion 14 when the clamping ear 16 is deformed to reduce the diameter of the clamping band 10. Note that, before the clamping band 10 is reduced in diameter, the catch nails 26a and 26b are out of engagement with the catch holes 28a and 28b.

When the clamping ear 16 is deformed and the band portion 12 is reduced in diameter, the arc-shaped sections 14a and 14b come closer to each other and the catch nails 26a and 26b are engaged with the catch holes 28a and 28b, so that the reduced-diameter state is maintained.

Note that the catch nails 26a,26a and 26b and the projections 25a and 25b are formed by drawing.

Fig. 13 refers to still another embodiment of the clamping band 10 that has, similarly to the embodiment shown in Fig. 11, the band portion 12 and the clamping portion 14.

Both the end sections 12a and 12b are overlapped with the inner side of the clamping portion 14 in such a way that the ends of both the end sections 12a and 12b are on the side of the arc-shaped section 14a. Each of the arc-shaped sections 14a and 14b of the clamping portion 14 is spot-welded at spots 11a and 11b on the band portion 12. To effect this positioning, the arc-shaped section 14a is provided with a projection 30 projecting inwardly. Also, the base section of the clamping ear 16 of the clamping portion 14 is provided with a catch hole 31a and a catch nail 32 on the side of the arc-shaped section 14a and a catch hole 31b on the side of the arc-shaped section 14b of the clamping portion 14.

The band portion 12 is provided with a hole 33 to catch the projection 30 of the clamping portion 14, and the band portion 12 is provided with a catch hole 34 which catches the catch nail 32 when the clamping ear 16 is deformed to reduce the clamping band diameter. This catch nail 34 is formed by cutting and bending up a nail piece 35a. The nail piece 35a engages with the catch hole 31a while the clamping band 10 is in the reduced-diameter state. A nail piece 35b, formed similarly, engages with a catch hole 31b while the clamping band 10 is not reduced in diameter, and serves also for positioning for the spot welding at spots 11a and 11b.

Note that, when the clamping ear 16 is deformed with a tool 36 like a pair of pincers, the clamping ear 16 first floats upwards (see Fig. 14) and comes into tight contact with the band portion 12 as the deformation further proceeds (see Fig. 13).

Fig. 15 shows another form of catch section. In this embodiment, on an inner band section 52 an outward projection 77 is formed. A projecting section 78, with which this projection 77 engages, is formed on outer band section 52b. A plurality of such projecting sections 78 are formed on the outer band section 52b, so that when the clamping ear 16 is deformed to reduce the clamping band 10 diameter, the projection 77 engages sequentially with the projecting sections 78 of the outer band section 52b until it is fixed at a position of suitable clamping strength. Thus, the clamping force may be adjusted.

Fig. 16 shows still another embodiment.

This clamping band 10 has a band portion 82 and a clamping portion 84 with a clamping ear 16. Both the ends of the band portion 82 are overlapped with each other, and the outer side of the section 82a is spot-welded at a spot 81a onto the inner side of one arc-shaped section 84a of the clamping portion 84. In that region of the band portion 82 in contact with the inner side of the other arc-shaped section 84b of the clamping portion 84, the portions are spot-welded together at a spot 81b.

In addition, the overlapping portion between the overlapped portion of the band portion 82 and the other arc-shaped section of the clamping portion 84 is provided with a ring metal retainer 86 fixed on the inner side section 82b of the band portion 82.

When the clamping ear 16 of this clamping band 10 is deformed for diameter reduction, the end of the inner side section 82b of the band portion 82 is advanced, and when the retainer 86 has moved over the front end of the other arc-shaped section 84a, the retainer is deformed with a hammer or the like. As Fig. 16 shows, the retainer 86 then comes into engagement with the end of the section 84a of the clamping portion 84 to hinder diameter enlargement.

## Claims

1. A metallic clamping band formed in a ring which comprises separate inner and outer band portions (12,42,52,82;14,44,52,84), opposite ends (12a,12b) of the inner portion being overlapped by opposite ends of the outer portion and engagement means (18,20;48,49; 23,24;26,28;32,35a;86) being provided between the inner and outer band portions to latch them together, the outer band portion being provided in its middle region with a clamping ear (16) that is deformable to reduce the ring diameter,
characterised in that securing means (11a,11b;41,45,46'; 81a,81b) on said overlapped ends provide substantially fixed connections between the inner and outer portions securing them together in a closed ring,
that the engagement means (18,20;48,49;23,24; 26,28;32,35a;86) are disposed on one end (12b;42b;82b) of the inner band portion and the clamping ear (16) overlies said one end of the inner band portion to be located between said engagement means and the securing means (11b;41,81b) of said one end of the band portion, and
that said engagement means comprise cooperating stop faces which act to prevent reverse deformation of the ear to increase the diameter of the band.

2. A metallic clamping band according to claim 1, wherein the engagement means comprises a latching projection (18,24,26a,34,35a,48,58) on one of said inner and outer portions and a cooperating hole or depression (20,23,28a,31a,32,49,56) in the other of said portions.

3. A metallic clamping band according to claim 1 wherein the engagement means comprises a retainer (86) that is arranged to be deformed to prevent said reverse deformation of the clamping ear.

4. A metallic clamping band according to anyone of claims 1 to 3, wherein the securing means (45a,45b,45c, 46a,46b,46c,60,66,68,70) is arranged to allow the band to be opened and closed.

5. A metallic clamping band according to any one of claims 1 to 4 wherein opposite ends (13a,13b) of the inner band portion (12,42) are formed to nest with each other upon diameter reduction of the band portion (12,42).

6. A metallic clamping band according to claim 5 wherein said opposite ends (13a,13b) have terminal profiles permitting them to overlap circumferentially without radial overlap.

## Patentansprüche

1. Metallklemmschelle, die in einem Ring gebildet ist, der einen inneren und einen äußeren Bandabschnitt (12, 42, 52, 82; 14, 44, 52, 84) aufweist, die voneinander getrennt sind, wobei gegenüberliegende Enden (12a, 12b) des inneren Abschnittes von gegenüberliegenden Enden des äußeren Abschnittes überlappt werden und Eingriffsmittel (18, 20; 48, 49; 24, 24; 26, 28; 32, 35a; 86) zwischen dem inneren und äußeren Bandabschnitt vorgesehen sind, um sie miteinander zu verriegeln, der äußere Bandabschnitt in seinem mittleren Bereich mit einem Klemmauge (16) versehen ist, das zum Verringern des Ringdurchmessers deformierbar ist,
dadurch gekennzeichnet,
daß Sicherungsmittel (11a, 11b; 41, 45, 46', 81a, 81b) auf den überlappenden Enden im wesentlichen feste Verbindungen zwischen dem inneren und äußeren Abschnitt vorsehen, wodurch sie in einem geschlossenen Ring zusammen gesichert werden,
daß die Eingriffsmittel (18, 20; 48, 49; 23, 24; 26, 28; 32, 35a; 86) auf einem Ende (12b; 42b; 82b) des inneren Bandabschnittes vorgesehen sind und das Klemmauge (16) über dem einen Ende des inneren Bandabschnittes so liegt, daß es zwischen den Eingriffsmitteln und den Sicherungsmitteln (11b; 41; 81b) des einen Endes des Bandabschnittes angeordnet ist, und
daß die Eingriffsmittel zusammenwirkende Anschlagflächen aufweisen, die zum Verhindern der umgekehrten Deformation des Auges zum Erhöhen des Durchmessers des Bandes wirken.

2. Metallklemmschelle nach Anspruch 1, bei der das Eingriffsmittel einen verriegelnden Vorsprung (18, 24, 26a, 34, 35, 48, 58) auf einem des inneren und äußeren Abschnittes und ein zusammenwirkendes Loch oder Einsenkung (20, 23, 28a, 31a, 32, 49, 56) in dem anderen der Abschnitte aufweist.

3. Metallklemmschelle nach Anspruch 1, bei der das Eingriffsmittel einen Rückhalter (86) aufweist, der zum Verhindern der umgekehrten Deformation des Klemmauges zu deformieren ist.

4. Metallklemmschelle nach einem der Ansprüche 1 bis 3, bei der das Sicherungsmittel (45a, 45b, 45c, 46a, 46b, 46c, 60, 66, 68, 70) so angeordnet ist, daß es ermöglicht, daß die Schelle geöffnet und geschlossen wird.

5. Metallklemmschelle nach einem der Ansprüche 1 bis 4, bei der die gegenüberliegende Enden (13a, 13b) des inneren Bandabschnittes (12, 42) so gebildet sind, daß sie ineinander verzahnt sind nach der Durchmesserverringerung des Bandabschnittes (12, 42).

6. Metallklemmschelle nach Anspruch 5, bei der die gegenüberliegenden Enden (13a, 13b) Endprofile aufweisen, die es ihnen ermöglichen, umfangsmäßig zu überlappen ohne radiale Überlappung.

## Revendications

1. Collier métallique de serrage en forme de bague; comportant des parties intérieure et extérieure (12,42,52,82; 14,44,52,84) de collier, les extrémités opposées (12a,12b) de la partie intérieure étant chevauchées par les extrémités opposées de la partie extérieure, et des moyens d'accouplement (18,20;48,49; 23,24;26,28;32,35a;86) étant disposés entre les parties intérieure et extérieure de collier pour les accrocher l'une à l'autre, la partie extérieure de collier comportant dans sa partie médiane une anse de serrage (16) qui peut se déformer pour réduire le diamètre de la bague,
caractérisé en ce que des moyens de fixation (11a,11b; 41,45,46';81a,81b) présents sur lesdites extrémités superposées assurent des liaisons sensiblement fixes entre les parties intérieure et extérieure en fixant celles-ci l'une à l'autre en formant une bague fermée,
en ce que les moyens d'accouplement (18,20;48,49; 23,24;26,28;32,35a;86) sont disposés à une première extrémité (12b;42b;82b) de la partie intérieure de collier et l'anse de serrage (16) est placée par-dessus ladite première extrémité de la partie intérieure de collier pour se trouver entre lesdits moyens d'accouplement et les moyens de fixation (11b;41,81b) de ladite première extrémité de la partie de collier, et
en ce que lesdits moyens d'accouplement comportent des faces formant butées qui coopèrent pour empêcher une contre-déformation de l'anse afin d'accroître le diamètre du collier.

2. Collier métallique de serrage selon la revendication 1, dans lequel les moyens d'accouplement comportent une saillie de verrouillage (18,24,26a,34,35a, 48,58) située sur une première desdites parties intérieure et extérieure et un trou ou une dépression (20,23,28a, 31a,32,49,56) situé dans l'autre desdites parties pour coopérer avec ladite saillie.

3. Collier métallique de serrage selon la revendication 1, dans lequel les moyens d'accouplement comportent un élément de retenue (86) agencé pour se déformer afin d'empêcher ladite contre-déformation de l'anse de serrage.

4. Collier métallique de serrage selon l'une quelconque des revendications 1 à 3, dans lequel les moyens de fixation (45a,45b,45c,46a,46b,46c,60,66,68,70) sont agencés pour permettre l'ouverture et la fermeture du collier.

5. Collier métallique de serrage selon l'une quelconque des revendications 1 à 4, dans lequel les extrémités opposées (13a,13b) de la partie intérieure (12,42) de collier sont conçues pour s'emboîter l'une dans l'autre au niveau de la réduction de diamètre de la partie (12,42) de collier.

6. Collier métallique de serrage selon la revendication 5, dans lequel lesdites extrémités opposées (13a,13b) ont des parties terminales profilées leur permettant de se chevaucher dans le sens de la circonférence sans chevauchement radial.
